# FASCICULE DE BREVET EUROPEEN

(11) **EP 0 963 362 B1**
(45) Date de publication et mention de la délivrance du brevet: **04.09.2002**
(21) Numéro de dépôt: 98964534.6
(22) Date de dépôt: 28.12.1998
(51) Int. Cl.: C04B 35/83, C04B 35/80, F16J 1/01

(54) **PROCEDE DE FABRICATION D'UN PISTON DE MOTEUR A COMBUSTION INTERNE EN MATERIAU COMPOSITE THERMOSTRUCTURAL**
VERFAHREN ZUR HERSTELLUNG EINES INTERNEN VERBRENNUNGSMOTORKOLBENS AUS THERMISCH BESTÄNDIGEM VERBUNDWERKSTOFF
METHOD FOR MAKING AN INTERNAL COMBUSTION ENGINE PISTON IN THERMOSTRUCTURAL COMPOSITE MATERIAL

(30) Priorité: 29.12.1997 FR 9716615
(43) Date de publication de la demande: 15.12.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: CIAIS, Jean-Pierre, F-33290 Le Pian Médoc (FR); THEBAULT, Jacques, F-33200 Bordeaux (FR)
(74) Mandataire: Joly, Jean-Jacques
(86) Numéro de dépôt international: FR9802895
(87) Numéro de publication internationale: WO99033767

(56) Documents cités:
- EP-A- 0 147 297
- DE-A- 3 001 921
- DE-B- 2 912 786
- US-A- 4 909 133

## Description

### Domaine de l'invention

L'invention concerne la fabrication d'un piston de moteur à combustion interne en matériau composite thermostructural, c'est-à-dire en un matériau comprenant un renfort fibreux en fibres réfractaires densifié par une matrice en matière réfractaire.

### Arrière-plan de l'invention

Les matériaux composites thermostructuraux sont caractérisés par leurs propriétés mécaniques qui les rendent aptes à constituer des éléments de structure et par leur capacité à conserver ces propriétés jusqu'à des températures élevées. Ces matériaux sont notamment les matériaux composites carbone/carbone (C/C) comprenant un renfort en fibres de carbone noyé dans une matrice en carbone et les matériaux composites à matrice céramique (CMC) comprenant un renfort en fibres réfractaires, telles que des fibres de carbone ou de céramique, noyé dans une matrice céramique.

Du fait de leurs propriétés, les matériaux composites thermostructuraux peuvent être substitués aux matériaux métalliques pour la réalisation de pièces soumises à des efforts mécaniques et susceptibles d'être exposées à des températures élevées.

C'est ainsi qu'il a déjà été proposé de réaliser des pistons de moteurs à combustion interne en matériau composite C/C. Outre la tenue en température, les matériaux composites C/C présentent l'avantage d'une masse volumique bien inférieure à celle des métaux, ce qui permet de réduire les masses en mouvement et d'augmenter la vitesse de rotation maximale du moteur. En outre, la faible dilatation thermique du matériau et ses bonnes propriétés tribologiques réduisent fortement le risque de serrage ou grippage du piston, ce qui permet d'augmenter la fiabilité du moteur et de réduire le besoin en lubrifiant.

Il peut être fait référence au document US-A-4 909 133 qui décrit la fabrication d'un piston par élaboration d'un renfort fibreux, ou préforme, en une seule pièce, sous forme d'un tricot ("chaussette") en fibres de carbone, imprégnation de la préforme par une résine pour moulage et densification par une matrice carbone par voie liquide (imprégnation par résine et carbonisation) complétée par voie gazeuse (infiltration chimique en phase vapeur).

Le document DE-A-29 12 786 décrit aussi la fabrication d'un piston en matériau composite C/C par bobinage d'un fil de carbone et imprégnation par une résine carbonisée ensuite. La surface extérieure du piston, du côté exposé aux gaz de combustion est revêtue d'une couche de protection en carbure de silicium.

Il est nécessaire, dans un piston en matériau composite C/C, de conférer aux fibres du renfort des orientations adaptées en fonction des efforts auxquels le piston est soumis en service. Les techniques décrites dans les deux documents précités peuvent satisfaire cette condition, mais de façon coûteuse. Elles impliquent en effet la réalisation des préformes de façon individuelle et relativement complexe : tricotage d'une "chaussette" ou bobinage filamentaire suivant des parcours prédéterminés.

### Brève description de l'invention

L'invention a pour but de fournir un procédé de fabrication de piston en matériau composite thermostructural dans lequel l'élaboration de la préforme est simplifiée par rapport à l'état de la technique ci-dessus, de sorte que les coûts de fabrication peuvent être sensiblement réduits.

Selon un premier aspect de l'invention, ce but est atteint par un procédé qui comprend les étapes consistant à :
- réaliser une structure fibreuse par superposition de strates de texture fibreuse et liaison des strates entre elles par aiguilletage, de sorte que les fibres des strates superposées s'étendent essentiellement dans une première direction (X) et une deuxième direction (Y) orthogonales, les strates étant liées entre elles par des fibres déplacées par l'aiguilletage dans une troisième direction (Z) transversale par rapport aux strates,
- découper une préforme de piston dans la structure fibreuse de sorte que l'une des première et deuxième directions (X, Y) soit parallèle aux génératrices de la surface de la préforme correspondant à la surface cylindrique latérale du piston,
- densifier au moins partiellement la préforme par la matière constitutive de la matrice, et
- usiner le piston dans la préforme densifiée.

De préférence, le procédé comprend les étapes consistant à :
- densifier partiellement la préforme découpée,
- usiner une ébauche de piston dans la préforme partiellement densifiée,
- poursuivre la densification de l'ébauche de piston, et
- réaliser un usinage final du piston.

L'invention est remarquable du fait que les préformes ou ébauches de piston sont obtenues à partir d'une structure fibreuse simplement réalisée par aiguilletage de strates superposées dans lesquelles les fibres sont essentiellement orientées dans deux directions orthogonales (X, Y). Ces strates peuvent être des couches de tissu ou des nappes unidirectionnelles, ces dernières étant alors superposées alternativement dans des directions orthogonales. De préférence, le taux volumique global de fibres dans la structure fibreuse est compris entre 25 % et 40 %, et le taux volumique de fibres dans la troisième direction (Z) est au moins égal à 3 %.

De préférence, l'usinage du piston comprend la formation d'un alésage de réception d'axe à travers le piston, sensiblement parallèlement à la troisième direction (Z).

Selon une particularité du procédé, lorsque la matière constitutive de la matrice est du carbone, un traitement thermique de graphitation du carbone de la matrice est réalisé, afin d'améliorer la conductivité thermique.

Selon un deuxième aspect de l'invention, celle-ci vise aussi un piston en matériau composite thermostructural tel qu'cbtenu par les procédés définis plus haut.

D'autres particularités et avantages de l'invention ressortiront à la lecture de la description faite ci-après à titre indicatif mais non limitatif.

### Brève description des dessins

Sur les dessins annexés :
- la figure 1 montre les étapes successives de mise en oeuvre d'un procédé conforme à l'invention ;
- la figure 2 est une vue schématique en perspective d'un piston obtenu conformément à l'invention ; et
- la figure 3 est une vue en coupe du piston de la figure 2.

### Description détaillée de modes préférés de réalisation

Dans ce qui suit, il est envisagé la fabrication de pistons de moteur à combustion interne en matériau composite C/C. Toutefois, comme il apparaîtra immédiatement à l'homme de métier, l'invention est applicable aussi à la fabrication de pistons en matériaux composites thermostructuraux autres que les matériaux C/C, notamment en CMC.

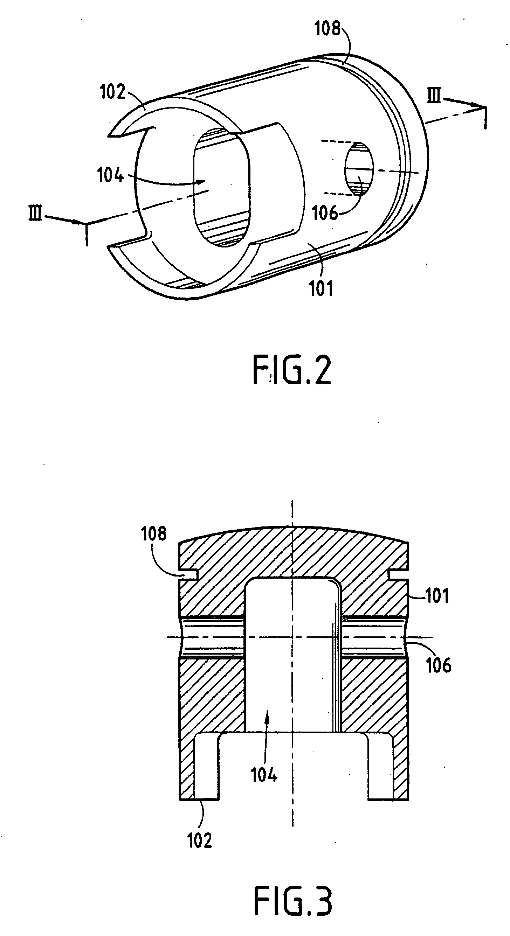

Une première étape 10 d'un procédé selon l'invention consiste dans la réalisation d'une structure fibreuse formée par superposition et aiguilletage de strates de texture fibreuse, comme montré par la figure 2.

Les strates 12 sont formées et disposées de manière que les fibres dans les strates superposées sont orientées essentiellement dans deux directions orthogonales X, Y. Dans l'exemple illustré, les strates 12 sont des couches de tissu. De préférence, le tissu est un tissu équilibré (mêmes densités en chaîne et en trame) à armure toile ou satin. Les couches de tissu sont superposées en orientant les sens chaîne et trame dans les mêmes directions.

En variante, les strates peuvent être formées de nappes de fils ou câbles unidirectionnels. La superposition des nappes est alors réalisée alternativement parallèlement aux directions X et Y.

L'aiguilletage des strates 12 est réalisé au moyen d'une planche à aiguilles 14 qui s'étend sur toute la longueur d'une des dimensions des strates et qui est animée d'un mouvement alternatif dans une direction Z transversalement par rapport aux strates 12, de préférence perpendiculairement à celles-ci. Chaque nouvelle strate est aiguilletée sur toute sa surface par déplacement relatif entre le support 16 des strates et la planche à aiguilles. L'aiguilletage est réalisé de préférence avec une densité constante, comme décrit dans le document US-A-4 790 052.

La superposition et l'aiguilletage des strates sont arrêtés lorsque l'épaisseur de la structure fibreuse atteint une valeur légèrement supérieure au diamètre des pistons à réaliser.

L'aiguilletage peut être réalisé sur des strates en fibres de carbone, notamment lorsque les fils constitutifs des strates sont formés de fibres discontinues qui peuvent être prélevées par les aiguilles sans endommagement notable des fils.

L'aiguilletage peut aussi être réalisé sur des strates en fibres de précurseur de carbone, afin d'éviter l'effet destructeur que pourraient avoir les aiguilles sur les fils carbone. Des fibres en précurseur de carbone sont notamment des fibres cellulosiques, des fibres phénoliques, des fibres de brai ou des fibres de polyacrylonitrile (PAN) préoxydé. La transformation du précurseur en carbone est effectuée par traitement thermique réalisé sur la structure aiguilletée.

Afin de conférer au matériau final les propriétés mécaniques voulues, il est préférable que le taux volumique de fibres dans la structure en fibres de carbone obtenue soit compris entre 25 % et 40 %. Par taux volumique de fibres, on entend ici le pourcentage du volume apparent de la structure effectivement occupé par les fibres.

En outre, afin de donner une cohésion inter-strates suffisante pour s'opposer à une décohésion ou délaminage ultérieur, il est préférable que le taux volumique de fibres déplacées dans la direction Z lors de l'aiguilletage et liant les strates entre elles soit au moins égal à 3 %.

Une deuxième étape (20) du procédé consiste à découper la structure fibreuse aiguilletée 18 en bandes 22 de largeur légèrement supérieure à la hauteur des pistons à réaliser, puis à découper des préformes 24 de pistons de forme cylindrique dans les bandes 22. La découpe des préformes 24 est réalisée de manière que l'une des directions X, Y est parallèle à la génératrice de la surface extérieure 24a de la préforme correspondant à la surface périphérique latérale du piston à fabriquer, tandis que l'autre direction est parallèle à la surface d'extrémité 24b de la préforme correspondant à la surface de la tête du piston destinée à être exposée aux gaz de combustion.

La découpe des bandes 22 et des préformes 24 peut être réalisée au moyen d'outils tels que scies ou emporte-pièce, ou encore, de préférence, au jet d'eau sous très haute pression.

Une troisième étape (30) consiste à réaliser une densification de la préforme de piston 24 par le carbone de la matrice du matériau composite C/C.

La densification peut être réalisée par voie liquide et/ou par voie gazeuse. La densification par voie liquide consiste à imprégner la préforme par un précurseur de carbone, par exemple une résine à fort taux de coke, puis à réaliser un traitement thermique de carbonisation de la résine pour obtenir la matrice de carbone pyrolytique. Plusieurs cycles d'imprégnation-traitement thermique peuvent être réalisés successivement. La densification par voie gazeuse consiste à réaliser une infiltration chimique en phase vapeur.

Les processus d'infiltration chimique en phase vapeur pour former des matrices de carbone pyrolytique sont bien connus. Il en est de même de procédés permettant de former des matrices en matériaux réfractaires autres que le carbone, par exemple en céramique.

Après l'étape 30 de densification, un traitement thermique à haute température peut être réalisé pour transformer en graphite le carbone pyrolytique de la matrice (étape 40). Cette graphitation est réalisée à une température d'environ 2000°C. La graphitation permet d'augmenter la conductivité thermique du carbone, pour assurer une meilleure évacuation de la chaleur à partir de la surface du piston au contact des gaz de combustion.

Le piston est ensuite usiné à ses dimensions finales (étape 50). La figure 2 montre un piston 100 ainsi obtenu, par exemple pour un moteur deux temps. L'usinage comprend la formation d'une jupe 102, à l'arrière du piston, d'un évidement longitudinal borgne 104 s'ouvrant à l'arrière du piston, à l'intérieur de la jupe pour le passage d'une bielle, d'un alésage transversal 106 formé à travers le piston, perpendiculairement à sa surface latérate cylindrique 101, et s'ouvrant dans l'évidement 104 afin de recevoir un axe (non représenté) de piston pour fixation de bielle, et d'au moins un logement périphérique, ou gorge, 108 formé dans la paroi latérale 101 pour recevoir un segment d'étanchéité (non représenté). Le segment d'étanchéité est communément sous forme d'un jonc coupé qui est ouvert pour être mis en place dans la gorge 108.

L'alésage transversal 106 est de préférence réalisé dans une direction transversale par rapport aux strates initiale, par exemple sensiblement parallèle à la direction Z des fibres déplacées par l'aiguilletage.

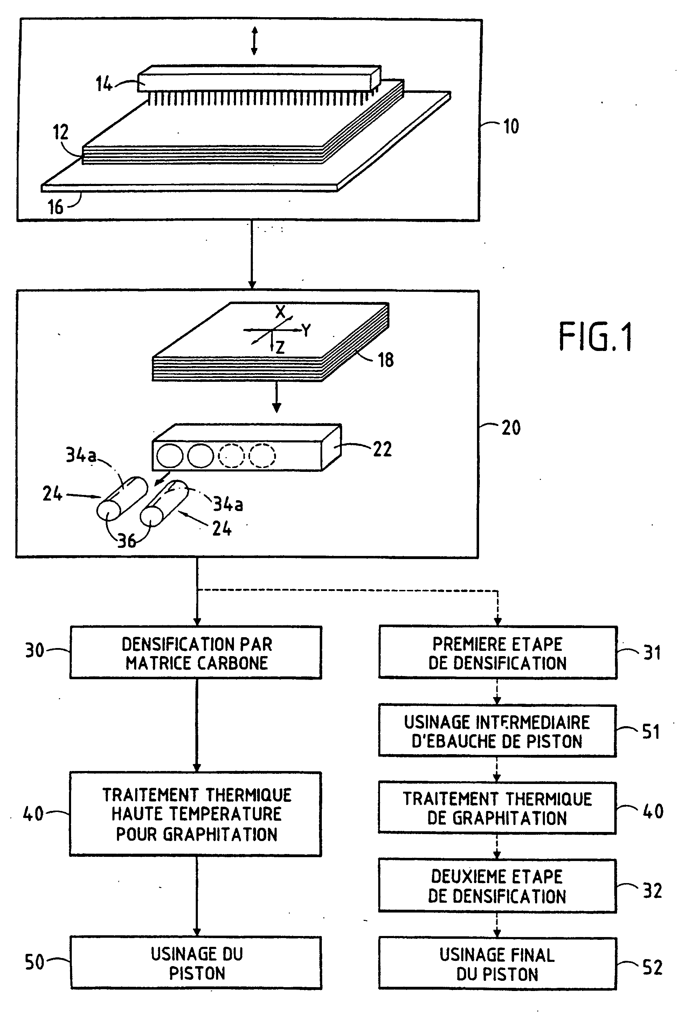

Selon une variante préférée de mise en oeuvre du procédé décrit ci-avant, montrée également par la figure 1, la densification de la préforme de piston peut être réalisée en deux étapes 31, 32 séparées par une étape d'usinage intermédiaire 51 et suivies par une étape d'usinage final 52. Le traitement thermique à haute température 40 peut alors être réalisé après usinage intermédiaire (51) et avant densification finale (32). Les autres étapes du procédé sont similaires à celles décrites plus haut.

L'usinage intermédiaire vise à amener le piston à une forme proche de sa forme définitive. Il a l'avantage de permettre un écroûtage de la préforme ayant subi la première étape de densification, de sorte que la densification finale permet d'infiltrer la matrice au coeur de la préforme et de minimiser le gradient de densification au sein du matériau composite. Il est bien connu en effet qu'au cours d'un processus d'infiltration chimique en phase vapeur réalisé dans des conditions isothermes, le matériau de la matrice a tendance à se déposer préférentiellement dans les parties de la préforme proches des surfaces exposées, ce qui ralentit la densification à coeur et peut conduire à une obturation prématurée de la porosité en surface. L'usinage de surface intermédiaire (écroûtage) permet de rouvrir cette porosité superficielle pour favoriser la poursuite de la densification.

## Revendications

1. Procédé de fabrication d'un piston de moteur à combustion interne en matériau composite thermostructural formé d'un renfort fibreux densifié par une matrice, le procédé étant **caractérisé en ce qu'**il comprend les étapes qui consistent à :
- réaliser une structure fibreuse par superposition de strates de texture fibreuse et liaison des strates entre elles par aiguilletage, de sorte que les fibres des strates superposées s'étendent essentiellement dans une première direction (X) et une deuxième direction (Y) orthogonales, les strates étant liées entre elles par des fibres déplacées par l'aiguilletage dans une troisième direction (Z) transversale par rapport aux strates,
- découper une préforme de piston dans la structure fibreuse aiguilletée de sorte que l'une des première et deuxième directions (X, Y) soit parallèle aux génératrices de la surface de la préforme correspondant à la surface cylindrique latérale du piston,
- densifier au moins partiellement la préforme par la matière constitutive de la matrice, et
- usiner le piston dans la préforme densifiée.

2. Procédé selon la revendication 1, **caractérisé en ce qu'**il comprend les étapes consistant à
- densifier partiellement la préforme découpée,
- usiner une ébauche de piston dans la préforme partiellement densifiée,
- poursuivre la densification de l'ébauche de piston, et
- réaliser un usinage final du piston.

3. Procédé selon l'une quelconque des revendications 1 et 2, **caractérisé en ce que** la découpe de la préforme de piston est réalisée au jet d'eau sous pression.

4. Procédé selon l'une quelconque des revendications 1 à 3, **caractérisé en ce que** le taux volumique global de fibres dans la structure fibreuse est compris entre 25 % et 40 %.

5. Procédé selon l'une quelconque des revendications 1 à 4, **caractérisé en ce que** le taux volumique de fibres dans la troisième direction (Z) est au moins égal à 3 %.

6. Procédé selon l'une quelconque des revendications 1 à 5, **caractérisé en ce que** les strates constitutives de la structure fibreuse sont choisies parmi des couches de tissu et des nappes unidirectionnelles.

7. Procédé selon l'une quelconque des revendications 1 à 6, **caractérisé en ce que** l'usinage du piston comprend la formation d'un alésage de réception d'axe de piston, transversalement aux strates de la structure fibreuse initiale.

8. Procédé selon l'une quelconque des revendications 1 à 6, **caractérisé en ce que** l'usinage du piston comprend la formation d'un alésage de réception d'axe de piston, sensiblement parallèlement à la troisième direction (Z).

9. Procédé selon l'une quelconque des revendications 1 à 8, dans lequel la densification est réalisée par une matrice de carbone, **caractérisé en ce qu'**il comprend une étape de traitement thermique de graphitation du carbone.

10. Piston de moteur à combustion interne, ayant une surface latérale cylindrique et réalisé en un matériau composite thermostructural comprenant un renfort fibreux densifié par une matrice, **caractérisé en ce que** le renfort fibreux comprend des strates superposées dans lesquelles les fibres sont essentiellement orientées suivant une première direction (X) et une deuxième direction (Y) orthogonales, et les strates sont liées entre elles par des fibres disposées dans une direction (Z) transversale par rapport aux strates, l'une des première (X) et deuxième (Y) directions étant parallèle aux génératrices de la surface cylindrique latérale du piston.

11. Piston selon la revendication 10, comprenant un alésage (106) de réception, d'axe formé transversalement, **caractérisé en ce que** l'alésage s'étend sensiblement parallèlement à la troisième direction (Z).

## Claims

1. A method of making a piston for an internal combustion engine out of thermostructural composite material formed of fibre reinforcement densified by a matrix, the method being **characterised in that** it comprises the steps consisting in:
- making a fibre structure by superposing plies of fibre fabric and bonding the plies together by needling, so that the fibres of the superposed plies extend essentially in a first direction (X) and in a second direction (Y) orthogonal thereto, the plies being bonded together by fibres that are displaced by the needling in a third direction (Z) that is transverse relative to the plies;
- cutting out a piston preform from the needled fibre structure so that one of the first and second directions (X, Y) is parallel to the generator lines of the surface of the preform that corresponds to the cylindrical side surface of the piston;
- densifying the preform at least partially with the material constituting the matrix; and
- machining the piston from the densified preform.

2. A method according to claim 1, **characterised in that** it further comprises the steps consisting in:
- densifying the cutout preform partially;
- machining a piston blank from the partially densified preform;
- continuing densification of the piston blank; and
- performing final machining of the piston.

3. A method according to claim 1 or 2, **characterised in that** the piston preform is cut out by means of a jet of water under pressure.

4. A method according to any one of claims 1 to 3, **characterised in that** the overall volume occupancy of fibres in the fibre structure lies in the range 25% to 40%.

5. A method according to any one of claims 1 to 4, **characterised in that** the fibre volume occupancy in the third direction (Z) is not less than 3%.

6. A method according to any one of claims 1 to 5, **characterised in that** the plies constituting the fibre structure are selected from layers of woven cloth and from unidirectional sheets.

7. A method according to any one of claims 1 to 6, **characterised in that** the machining of the piston includes forming a bore for receiving a wrist pin, the bore extending transversely to the plies of the initial fibre structure.

8. A method according to any one of claims 1 to 6, **characterised in that** the machining of the piston includes forming a bore for receiving a wrist pin, the bore extending substantially parallel to the third direction (Z).

9. A method according to any one of claims 1 to 8, in which densification is performed by means of a carbon matrix, the method being **characterised in that** it includes a step of applying graphitisation heat treatment to the carbon.

10. A piston for an internal combustion engine, the piston having a cylindrical side surface and being made of a thermostructural composite material comprising fibre reinforcement densified by a matrix, the piston being **characterised in that** the fibre reinforcement comprises superposed plies in which the fibres are oriented essentially in a first direction (X) and in a second direction (Y) orthogonal thereto, the plies are bonded together by fibres placed in a direction (Z) extending transversely relative to the plies, one of the first and second directions (X, Y) being parallel to the generator lines of the cylindrical side surface of the piston.

11. A piston according to claim 10, including a pin-receiving bore (106) extending transversely, the piston being **characterized in that** the bore extends substantially parallel to the third direction (Z).

## Patentansprüche

1. Verfahren zum Herstellen eines Kolbens für einen Motor mit innerer Verbrennung aus bei Wärme strukturbeständigem Verbundwerkstoff, der aus einer durch eine Matrix verdichteten Faserverstärkung gebildet ist, wobei das Verfahren **dadurch gekennzeichnet ist, dass** es folgende Schritte beinhaltet:
- Herstellen einer Faserstruktur durch Übereinanderlegen von Fasergebildelagen und Verbinden der Lagen untereinander durch Nadelung, derart, dass die Fasern der übereinander gelegten Lagen sich im Wesentlichen in einer ersten Richtung (X) und einer zweiten Richtung (Y), die orthogonal zueinander sind, verlaufen, wobei die Lagen untereinander durch auf Grund der Nadelung in eine dritte Richtung (Z) quer zu den Lagen versetzte Fasern verbunden sind,
- Schneiden eines Kolben-Vorformlings aus der genadelten Faserstruktur in der Weise, dass eine von der ersten und der zweiten Richtung (X) parallel zu den Mantellinien der Oberfläche des Vorformlings entsprechend der seitlichen Zylinderfläche des Kolbens verläuft,
- zumindest teilweises Verdichten des Vorformlings durch das die Matrix bildende Material, und
- Material abhebendes Bearbeiten des Kolbens aus dem verdichteten Vorformling.

2. Verfahren nach Anspruch 1, **dadurch gekennzeichnet, dass** es folgende Schritte beinhaltet:
- teilweises Verdichten des ausgeschnittenen Vorformlings,
- Material abhebendes Arbeiten eines Kolben-Rohlings aus dem teilweise verdichteten Vorformling,
- Fortsetzen der Verdichtung des Kolben-Rohlings, und
- Ausführen einer Endbearbeitung des Kolbens.

3. Verfahren nach einem der Ansprüche 1 und 2, **dadurch gekennzeichnet, dass** das Ausschneiden des Kolben-Vorformlings mittels Druckwasserstrahl erfolgt.

4. Verfahren nach einem der Ansprüche 1 bis 3, **dadurch gekennzeichnet, dass** der Gesamtvolumenanteil von Fasern innerhalb der Faserstruktur zwischen 25% und 40% liegt.

5. Verfahren nach einem der Ansprüche 1 bis 4, **dadurch gekennzeichnet, dass** der Volumenanteil von Fasern in der dritten Richtung (Z) mindestens 3% beträgt.

6. Verfahren nach einem der Ansprüche 1 bis 5, **dadurch gekennzeichnet, dass** die aufeinander folgenden Lagen der Faserstruktur ausgewählt sind aus Gewebeschichten und unidirektionalen Flachstücken.

7. Verfahren nach einem der Ansprüche 1 bis 6, **dadurch gekennzeichnet, dass** das Bearbeiten des Kolbens die Ausbildung einer Bohrung zur Aufnahme der Kolbenachse beinhaltet, quer verlaufend zu den Lagen der Anfangs-Faserstruktur.

8. Verfahren nach einem der Ansprüche 1 bis 6, **dadurch gekennzeichnet, dass** die Bearbeitung des Kolbens die Ausbildung einer Achse zur Aufnahme des Kolbens beinhaltet, etwa parallel verlaufend zu der dritten Richtung (Z).

9. Verfahren nach einem der Ansprüche 1 bis 8, bei dem die Verdichtung mit einer Kohlenstoffmatrix erfolgt, **dadurch gekennzeichnet, dass** es einen Schritt der thermischen Grafit-Überzugbehandlung mittels Kohlenstoff aufweist.

10. Kolben für einen Motor mit innerer Verbrennung, umfassend eine seitliche Zylinderfläche und hergestellt aus einem bei Wärme strukturbeständigen Verbundwerkstoff, der eine durch eine Matrix verdichtete Faserverstärkung enthält, **dadurch gekennzeichnet, dass** die Faserverstärkung übereinander gelegte Lagen aufweist, in denen die Fasern im Wesentlichen gemäß einer ersten Richtung (X) und einer zweiten Richtung (Y) orientiert sind, die orthogonal zueinander sind, wobei die Lagen untereinander durch Fasern verbunden sind, die in einer Richtung (Z) quer bezüglich der Lagen verlaufen, wobei eine von der ersten (X) und der zweiten (Y) Richtung parallel verläuft zu den Mantellinien der seitlichen Zylinderfläche des Kolbens.

11. Kolben nach Anspruch 10, umfassend eine quer ausgebildete Achsen-Aufnahmebohrung (106), **dadurch gekennzeichnet, dass** die Bohrung sich etwa parallel zu der dritten Richtung (Z) erstreckt.
